Europäisches Patentamt

European Patent Office

Office européen des brevets

(11) Publication number: **0 226 716**
**A2**

# (12) EUROPEAN PATENT APPLICATION

(21) Application number: 86112306.5

(22) Date of filing: 05.09.86

(51) Int. Cl.⁴: **G01D 5/24**

(30) Priority: 16.09.85 US 776557

(43) Date of publication of application:
**01.07.87 Bulletin 87/27**

(84) Designated Contracting States:
**DE FR GB IT**

(71) Applicant: **Hewlett-Packard Company**
**Mail Stop 20 B-O 3000 Hanover Street**
**Palo Alto California 94304(US)**

(72) Inventor: **Herr, Tammy**
**2652 Alta Vista Drive**
**Fallbrook CA.92028(US)**
Inventor: **Hoggatt, Michael L.**
**1419 Queenston Drive**
**Escondido CA.92027(US)**
Inventor: **Merrill, Howard L.**
**13254 Poway Hills Drive**
**Poway CA.92064(US)**
Inventor: **Wilson, Arthur K.**
**11305 Seda**
**San Diego CA.92124(US)**

(74) Representative: **Liesegang, Roland, Dr.-Ing.**
**Sckellstrasse 1**
**D-8000 München 80(DE)**

(54) Capacitive position transducer system.

(57) A transducer comprises a drive member (24) and a sense rotor (22) having confronting capacitively coupled electrode faces, each face of which comprises a circular pattern of electrodes (38,44) relatively rotatably mounted in concentric relationship.

Either the drive member or the sense rotor, or both, are provided with a set of curved electrodes - (38,44) which are slanted or swept back with respect to one direction of rotation.

The electrodes (38) of the drive member (24) are completely interdigitated using a plurality of successively phase shifted, time varying drive voltages, coupled (at 5,6,7,8) individually to a corresponding plurality of drive member electrodes (38).

Pickup signal errors are minimized by a three dimensional sense rotor (22) in which the sense electrodes (44) are coupled to an isolated pickup electrode (48) disposed adjacent the axial face of the sense rotor opposite that of the sense electrode face.

The drive electrodes (38) and the sense electrodes (44) are configured to provide capacitive coupling between a single drive electrode and a single sense electrode that closely approaches a pure sine wave as a function of the angular displacement of the sense rotor (22) with respect to the drive member (24).

The sensed phase angle is used to provide an accurate digital indication of position which can be read by a microprocessor or other controller.

FIG 1

## CAPACITIVE POSITION TRANSDUCER SYSTEM

### BACKGROUND OF THE INVENTION

#### 1. Field of the Invention

This invention relates to position measuring transducer systems employing as the sensitive element two relatively moveable members having confronting capacitively coupled electrode faces.

#### 2. Description of Prior Art

Capacitively coupled position transducer systems are described in Patents 3,125,716 3,219,920 3,961,318 and 4,522,517.

Patent 3,125,716 describes a system employing an electrostatically or capacitively coupled displacement sensor employing two sets of intermeshed sinusoidally shaped electrodes coupled to output electrodes, all of which are mounted on a stationary dielectric base. Coupler bars disposed transversely to the sinusoidal gaps are moveable along the sinusoidal gaps and are capacitively coupled to the intermeshed sinusoidal electrodes. Corresponding electrodes of the two sets of intermeshed sinusoidal electrodes receive signals A cos wt and -A cos wt, respectively. It is stated that relative movement results in a constant amplitude signal whose phase varies as a function of the mechanical movement. Both linear and rotary applications are contemplated.

Patent 3,219,920 is a further development of the disclosure of Patent 3,125,716 in the addition of a grounded guard ring conductor to provide a local ground for stray capacatance coupling and functioning as an electrostatic shield between the output conductors and the drive patterns.

Patent 3,961,318 describes a capacitively coupled transducer arrangement having a pair of relatively moveable members in which, the confronting electrode faces each comprise physically interdigitated, uniformly spaced, capacitively coupled electrodes disposed transversely of the path of movement. Either rotary or linear applications are contemplated. Both the drive signals and the pickup signals are coupled to and from the stationary member. For rotary applications the sensitive portions of the electrodes, have their side edges lying along radii. For linear applications the sensitive portions of the electrodes are rectangular fingers.

Patent 4,522,517, in disclosing a position measuring system, describes a linear capacitive encoder including a pickup plate comprising several conducting plates or electrodes disposed on the surface of a suitable electrical insulating material to form one plate of a capacitor rigidly coupled to the print bar of a dot matrix printer. The other plate comprises a printed circuit board on the printer chassis. Finger-like conducting plates or electrodes are disposed on the printed circuit board transversely of the path of movement of the print bar. There are four electrodes on the moveable print bar, each having a width to span four transmitter fingers or electrodes, and five sets of eight fingers or electrodes for the transmitter pattern. The capacitive encoder provides signals used in the system for determining present direction of movement, direction change and increments of movement. An eight phase set of square waves drives the transmitter fingers, which are fully interdigitated, that is, electrically and mechanically interdigitated.

A project paper presented to the Department of Electrical Engineering of the Brigham Young University, entitled Analysis and Design of a Capacitive Angle Transducer, dated August, 1980, by Alan J. Baker, describes several patterns of electrodes - (referred to as teeth) on the stationary and rotary members of the angle transducer. One embodiment comprises a rotary sense disc having half the number of teeth or electrodes as the stationary drive disc. The electrodes on the drive disc are arranged in groups of four which are driven with time quadrature signals. These quadrature signals are capacitively coupled to the electrodes or teeth on the rotary sense disc which are coupled in interdigitated groups of two. These are differentially detected. The electrodes or teeth on each disc are radially disposed. This design is further detailed on page 82 of this project paper. Trapezoidal and parallelogram electrodes or tooth configurations are also considered. These are discussed in Chapter VI. Their purpose is to eliminate one or more selected harmonics of the spacial capacitance function.

### SUMMARY OF THE INVENTION

This invention provides improvements in position transducer sytems employing capacitively coupled rotatable and stationary members, in the provision of curved electrode configurations having a capacitance vs. angle function which is substantially sinusoidal when fringing effects are included. Such electrodes have curved side edges which radiate outwardly in an electrode assembly defining a circular pattern. The curvature of the side edges is such that different equal incremental angles, having their vertices at the center of the circular pattern of electrodes, intersect or subtend distances on one curved side edge, or the other, of an electrode, which have equal perpendicular projections onto corresponding sides of the incremental angles. A spiral satisifes this condition, however, very close approximations are achieved in the range of electrode sizes employed and in their radial disposition in a circular pattern, using arcs of a circle. Such electrodes are effective on either the rotating, or stationary member of the encoder, or both. When used on both they may be slanted in the same direction or in opposite directions in their disposition in confronting, concentric relationship. In addition to providing improvement in signals generated during angular displacement, the electrode configurations provide a basis for achieving higher physical electrode packing densities using conventional printed circuit techniques.

In another of its aspects this invention is applicable to both linear and rotary transducers and provides improvements in the provision of a three dimensional movable sense member functioning as the sensor element. The sense member, here disclosed as a sense rotor is of a dimensionally stable plastic material such as nylon and additionally is of sufficient axial dimension to resist warping in a humid or generally adverse environment. The sense electrodes project from one axial face of the three dimensional rotor and may be faced with a metal foil, a metallic coating, or, formulated in the molding process with a conductive plastic using carbon for conductivity. Carbon filaments or fibers are preferred for this purpose. Other electrical conducting materials may be used or non conductive materials having a high dielectric constant may be used. The three dimensional rotor results in greater encoder accuracy in that an additional degree of freedom exists in controlling fringing effects which are used to help provide the sinusoidal function referred to above, that is, a sinusoidal variation in capacitance as a function of angular displacement of the sense rotor electrodes with respect to the electrodes on the stationary member.

Sense rotors fabricated of plastics in a three dimensional configuration offer an additional advantage in that the angular moment of inertia can be tailored to fit the requirements of the system in which they must function. During the rotor fabrication process, metallic particles are distributed in the rotor body in non-contacting relationship to provide the required mass and/or momement of inertia for drive requirements.

The use of a three dimentional sense rotor or movable member offers a significant improvement in signal coupling over the two dimensional types of the prior art. The rear face of the sense member which is opposite the sense electrode face, functions as the pickup face. This pickup face is physically remote from the drive plate and is used to electrically couple the sense electrodes to a pickup electrode confronting the pickup face. In this position, the pickup electrode is isolated from the drive plate and is coupled to an isolated preamplifier. With this arrangement, undesired drive and sense signal mixing due to stray capacitance coupling, is obviated.

Yet a further improvement is realized with this arrangement in that the entire rear face of the three dimensional sense rotor or movable member is used as the pickup face. This provides a greater sense signal pickup area than is available in two dimensional arrangements. In two dimensional rotary transducers, for example, the drive electrodes and the sense electrodes define circular patterns occupying most of the available drive plate or sense rotor surface area. Since the pickup electrodes are on the same surfaces as the drive and sense electrodes, only a very limited pickup electrode surface area is available.

Mismatched drive signals in capacitive position encoder or transducer systems introduce errors in the indication of position. Conventional approaches to drive signal generation do not provide consistent signal matches, particularly in amplitude. This invention solves the problem of drive signal amplitude matching using a digitally generated, pulse width modulated, rectangular wave chosen to have low 2nd, 3rd, 4th, and 5th harmonic components.

Disturbing signals induced in the movable sense member by interconnection systems are minimized in unique drive trace or circuit interconnections designed to balance out such disturbances. Here the drive traces are part of an integral interconnection system positioned on the back side of a drive plate comprising a printed circuit board coupled via feed through holes to the drive electrodes on the opposite drive electrode face. The design in addition to balancing out disturbing signals in the sense rotor electrode system also balances out capacitive effects between drive electrodes and drive traces or circuits due to capacitive coupling between drive traces or circuits on one side of the circuit board and the drive electrodes on the other.

Spurious coupling to amplifiers and other elements of the encoder system is minimized using techniques designed to cancel stray fields. This is achieved in a completely electrically and physically interdigitated electrode system employing sine, cosine, -sine and -cosine electrical drive voltages coupled in circumferential sequence to corresponding electrodes of the drive electrode groups.

The quadrature drive system of this capacitive position encoder or transducer system results in zero cyclic errors due to the 2nd, 4th, etc. harmonics of the spatial capacitance function. Zero cyclic errors due to 2nd, 4th, etc., harmonics of the drive signal are also realizable under certain conditions if the harmonic contents of all four drive signals are identical.

## BRIEF DESCRIPTION OF THE DRAWINGS

FIG. 1 is an exploded isometric projection of a capacitive position encoder or transducer system embodying the principles of this invention;

FIG. 2 is a plan view of the drive plate of FIG. 1;

FIG. 3 is a plan view of the three dimensional sense rotor of FIG. 1;

FIG. 4 illustrates the geometry of one configuration of a curved electrode as employed in this invention;

FIG. 5 is a plan view of a drive plate employing electrodes of a different shape than those of FIG. 2;

FIG. 6 is a plan view of a two dimensional sense rotor, useable with the drive plate of FIG. 5, employing the curved electrodes of this invention;

FIG. 7 schematically depicts an organizational concept of this invention embodying the three dimensional sense rotor;

FIG. 8 is a block diagram of a circuit for generating four quadrature phase, phase modulated, rectangular wave drive signals;

FIG. 9 depicts a typical phase modulated, rectangular wave drive signal as employed in this invention;

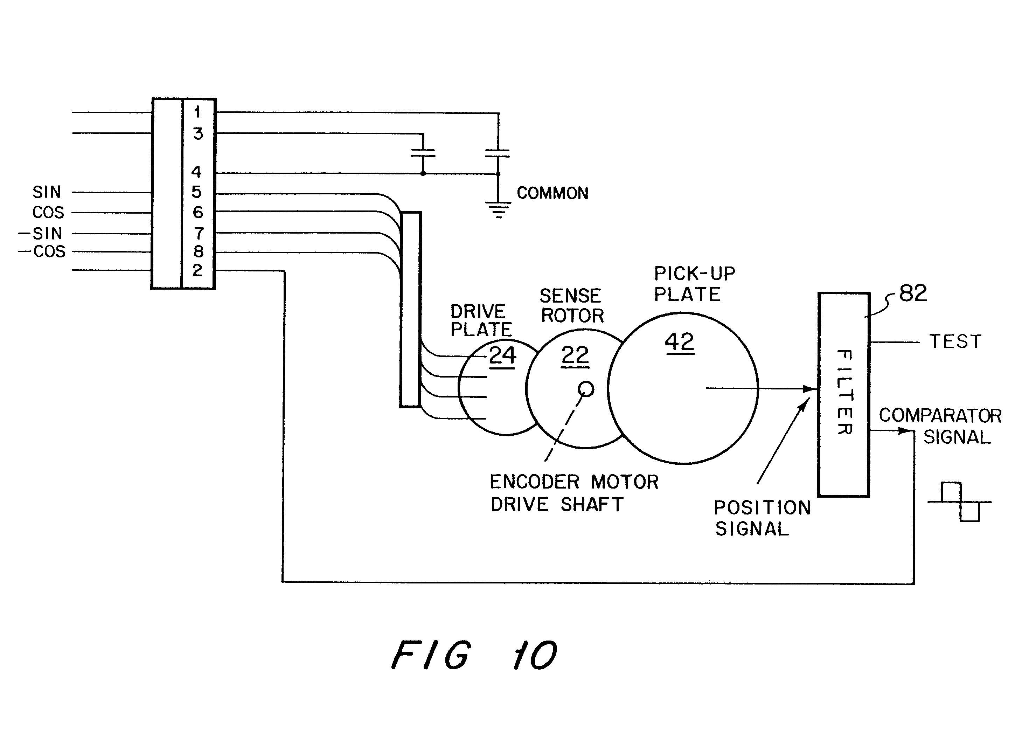

FIG. 10 schematically illustrates this improved position encoder or transducer system;

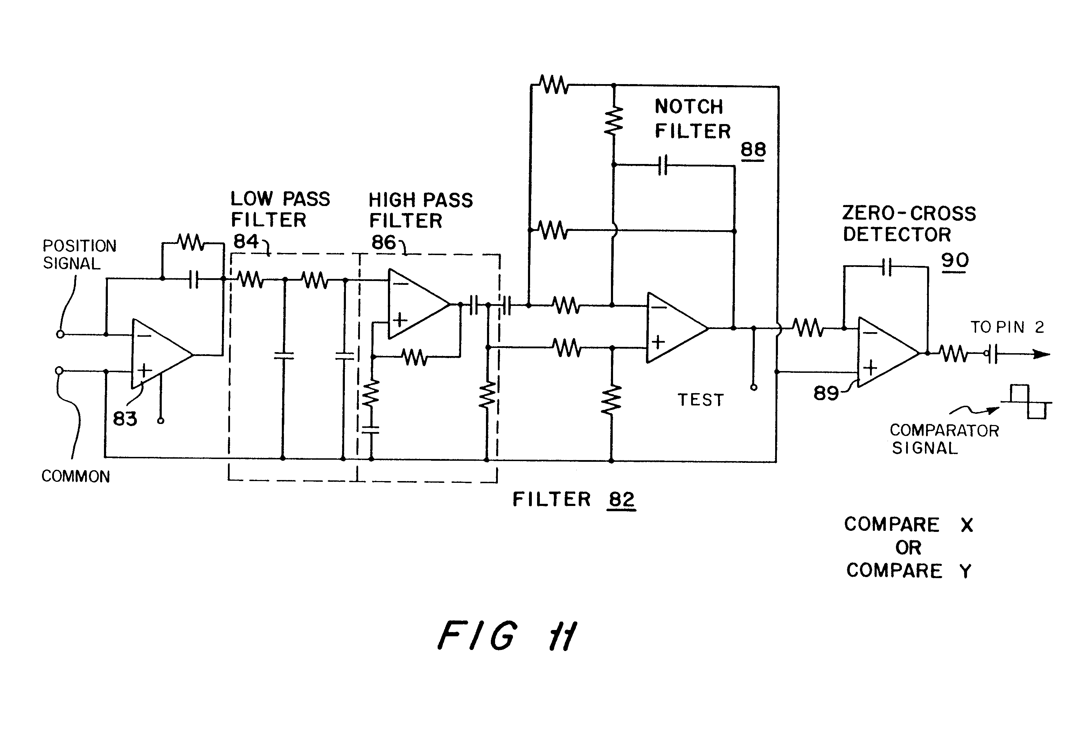

FIG. 11 is a circuit diagram of the filter of FIG. 10.

## DESCRIPTION OF THE PREFERRED EMBODIMENT

Position encoder or transducer systems are used in positioning systems for controlling the position of a member in its axis of freedom, as in a plotter, printer or machine tool. One positioning system is provided in each axis. In one type of application, the drive member of the positioning system moves the member in the axis in response to a command output which is used as the reference position. Movement stops when the position output developed by the position encoder or transducer system matches the reference position, indicating that the desired position in the axis has been reached.

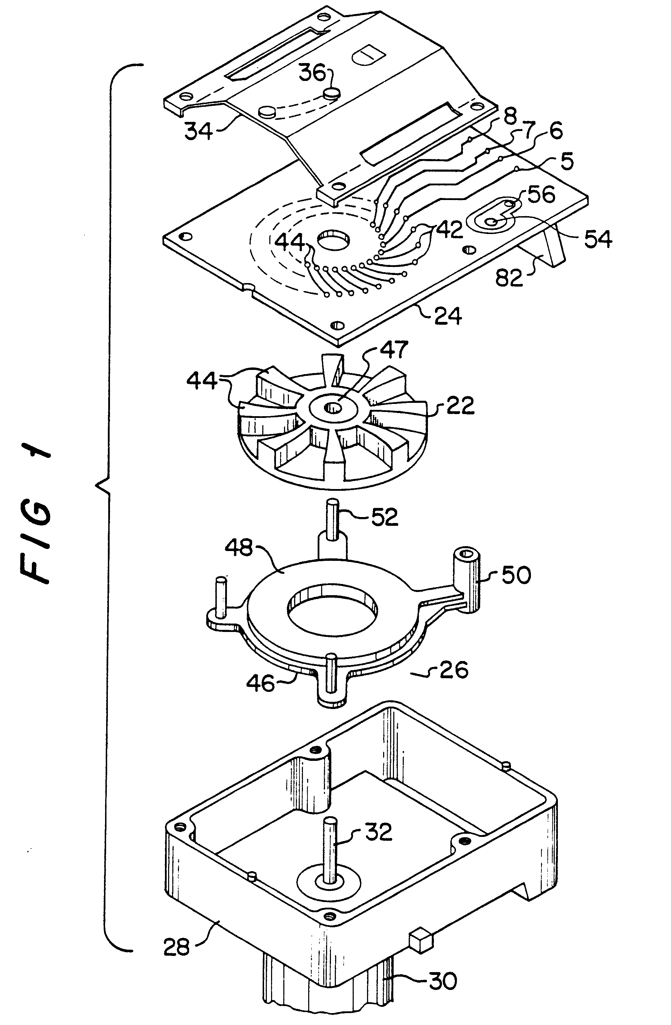

A presently preferred embodiment of a capacitive encoder or transducer system embodying the principles of this invention and suited for an application such as that described, is illustrated in FIG. 1. There are three key elements. These are, a three dimensional sense rotor 22, a drive plate 24 and a pickup electrode assembly 26. These three elements are disposed in axially spaced concentric positions, with the sense rotor disposed between the drive plate and the pickup electrode assembly, within a die cast metal or conductive plastic housing 28, attached to a motor 30, the housing of which is secured to the bottom side of the housing 28 and the shaft 32 of which extends upwardly through the bottom of the housing 28.

When assembled, the pickup electrode assembly 26 rests on the bottom of the housing 28 in a position concentrically disposed about the motor shaft 32. The sense rotor 22 is secured to the motor shaft and is electrically insulated from it in a position with its bottom axial face, here called the pickup face, spaced from and confronting the upper face 48 of the pickup electrode assembly 26. The drive plate 24 rests on the upper edges of the sides of the housing 28 and is covered by a cover plate 34 of metal having a leaf spring mounted contact 36 which engages the upper end of the motor shaft 32 providing a ground or common connection. Screws (not shown) passing through the axially aligned holes in the cover plate 34 and the drive plate 24, thread into matching holes, opening through the upper edges of the sides of the housing 28, to secure the assembly. The sensitive transducer elements namely the sense rotor 22, the drive plate 24, and the pickup electrode assembly 26 are now shielded from stray field coupling, being encapsulated within the described metal or conductive plastic structure. All electrode faces are disposed in fixed axial relationships.

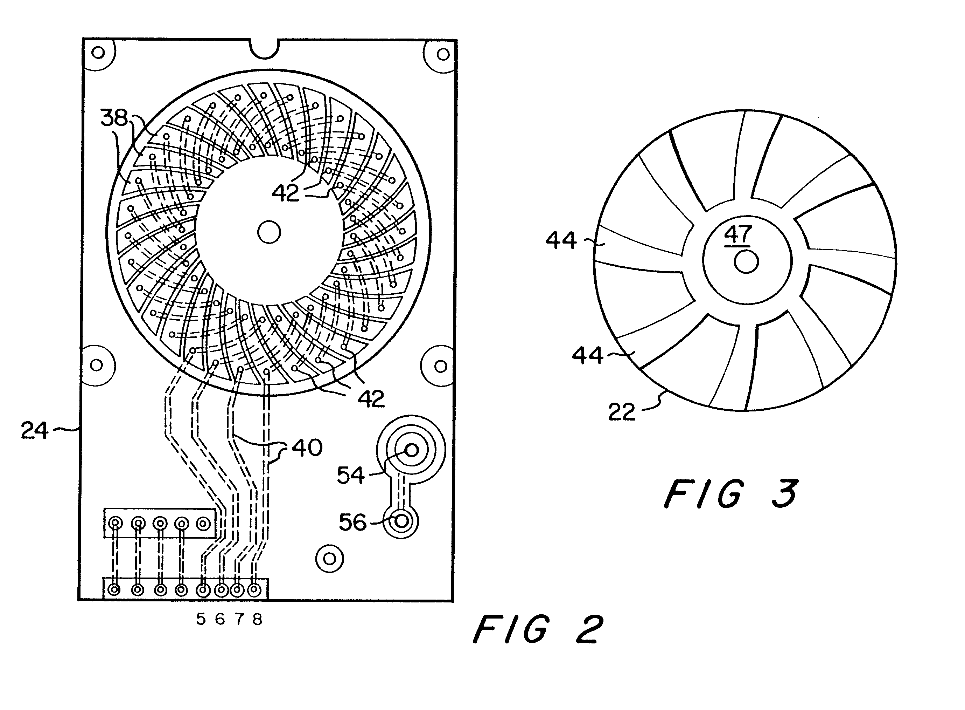

The drive plate 24 is a printed circuit board which has a metal surface on each side. These metal surfaces are etched to provide a circular pattern of individual, electrically isolated drive electrodes 38 on one side, as detailed in plan view in FIG. 2 and etched on the opposite side to provide wires or drive traces 40 which connect a plurality of terminals 5, 6, 7, and 8 to a first group of four drive electrodes 38. These drive electrode configurations and circuit drive traces are fabricated using conventional printed circuit fabrication techniques. As will be seen by reference to FIG. 2, the drive electrode arrangement describes a circular drive electrode pattern consentrically disposed with respect to a central opening through which the drive shaft of the motor passes, as is apparent in FIG. 1. Each end of the individual drive electrodes is provided with a feed through hole 42 through which electrical connections are made. As seen in FIG. 2 and also in FIG. I, the drive traces from the terminals 5, 6, 7 and 8 are coupled to feed through holes in individual drive electrodes adjacent to their outer edges, defining a first group of drive electrodes to which drive signals are coupled. The electrical drive signals, which are not shown at this point, but which will be discussed in some detail at a later point, comprise successively phase shifted, sine wave emulating electrical signals, which are respectively coupled to the terminals 5, 6, 7 and 8. Proceeding circumferentially in a counter clockwise direction around the circular pattern of drive electrodes, each outer terminal or feed through hole of each drive electrode is coupled to an inner feed through hole of a corresponding drive electrode in the next group of four drive electrodes. By this expedient, with the number of drive electrodes provided, there is a continuous circuit from each outer drive electrode drive trace connection through the individual drive traces and corresponding drive electrodes back to the inner connection at each corresponding drive electrode of the first group of drive electrodes. This provides separate drive electrode circuits around the circular pattern of drive electrodes which respectively receive the successively phase shifted, sine wave types of drive signals.

The circular pattern of drive electrodes on the electrode face of the drive plate 24 comprises individual curved drive electrodes. These electrodes are predominantly defined by curved side edges. The individual electrodes have a spiral shaped appearance and are disposed in slanted positions with respect to radii at their individual locations in the circular electrode pattern which they define.

The three dimensional sense rotor 22 is fabricated from a plastic material which either may be conductive or non-conductive. As seen in FIG's. I and 3 the sense rotor is not just a flat plate with sense electrodes formed upon it, but is rather provided with a significant axial dimension which improves dimensional stability under adverse environmental conditions. Integral sense electrodes 44 of the same general configuration as those described in connection with FIG. 2 project from the upper face of the sense rotor 22. If the sense rotor 22 is of non-conductive material, the upper faces of the sense electrodes 44 may be covered with a metal foil, may be covered with a sprayed on metal, or may be plated with copper or gold, for example, or the sense rotor may be of a material having a high dielectric constant. It has been found to be unnecessary to limit the coating to the upper faces of the sense electrodes; rather the entire upper surface of the sense rotor may be covered with metal foil or the sprayed or plated metal. When the sense rotor is fabricated of an electrical conducting plastic, metallic coatings for the various sense electrodes are not required.

The sense rotor 22 has a central hub portion 47, which is of electrical insulating material, which is secured to the motor shaft 32 and is of sufficient dimension to electrically isolate the sense rotor from the motor shaft.

The pickup electrode assembly 26 comprises a support plate 46 of electrical insulating material and a metallic or conductive plastic electrode 48 which is coupled to a terminal 50. Upwardly projecting pins 52 of electrical insulating material, engage the bottom face of the drive plate 24 in assembled position, which secures the pickup electrode assembly 26 against any axial movement, maintaining a constant spaced relationship of the pickup electrode 48 from the bottom side or pickup face of the sense rotor 22. A pickup electrode terminal 50 engages a terminal 54 on the drive plate 24. The connection is secured by means of a screw, not shown. Terminal 56 forming a part of the terminal 54, provides a connection whereby the sense rotor signal may be carried out to an external circuit, such as the pre-amplifier shown in FIG. II.

Thus the sense electrodes of the sense rotor are coupled to the pickup electrode 48 at the rear face of the sense rotor and, in this respect, the electrical output of the sense electrodes is isolated from the drive plate drive voltages. It will be noted that in the Patent 3,961,318, the output of the sense electrodes is capacitively coupled back to the coupling electrode or pickup on the stationary drive plate and then coupled to an external circuit via sense pickup circuits or traces on the same printed circuit board as the drive electrodes. This physical arrangment is very prone to having the pickup traces carrying the sense signals, also pick up signals directly from nearby drive circuits or traces.

By picking up sense signals, as disclosed herein, with a separate pickup electrode 48 which is capacitively and physically isolated from the drive plate and conducting these signals in a circuit removed from the drive circuits to an isolated amplifier or external circuit, undesired drive and sense signal mixing is obviated.

Additionally, sense signal levels are increased by positioning the pickup electrode assembly 26 at the rear or pickup face of the sense rotor 22. This provides a greater signal pickup area since the entire rear face of the sense rotor can be used for capacitively coupling the sense signal into the pickup electrode circuit.

The drive system is completely electrically and physically interdigitated with sine, cosine, -sine and -cosine drive signals being coupled to terminals 5,6,7 and 8, respectively, providing quadrature phase excitation of the corresponding electrodes in the individual electrode groups around the circular pattern of drive electrodes. This electrical and physical interdigitation of electrodes reduces spurious coupling to amplifiers and other circuits, because stray external fields tend to cancel to a greater extent than in partially interdigitated electrode arrangements.

As will be seen by reference to FIG's. l and 2, the drive circuits or traces 40 are interconnected via an integral interconnection system on the drive plate 24, which is designed to balance out disturbing signals induced in the measurement system by the interconnection system. This interconnection system using the curved traces or circuits on the side of the circuit board opposite to the drive electrodes 38, balances out capacitive coupling effects between drive electrodes due to the capacitance between a drive electrode and traces passing on the other side of the drive plate which are connected to other drive electrodes. This is a problem when electrical drives not having zero source impedance are used. The interconnection system also helps balance out signals picked up from the interconnection system by the sense rotor 44 directly through gaps between the drive electrodes.

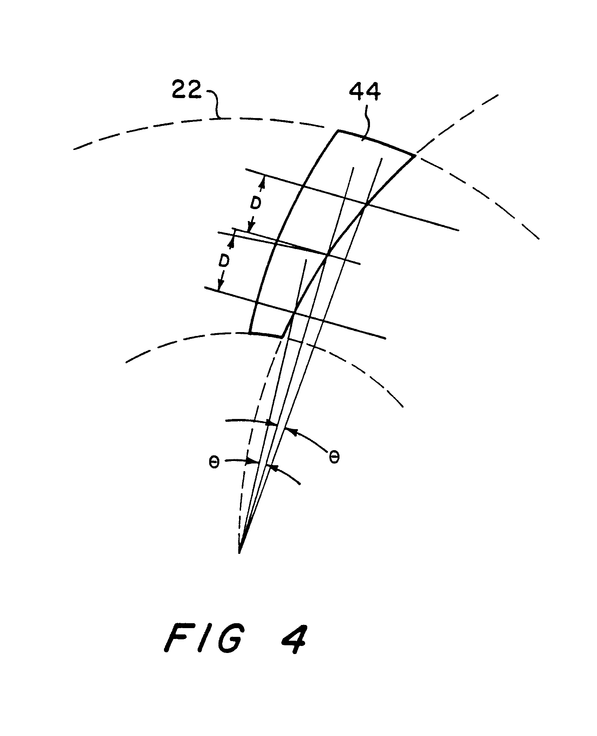

Curved electrodes may be used either on the sense rotor, or on the drive plate, or on both. The curved drive and sense electrodes may be slanted in the same direction when the electrodes are in confronting relationship, which is the arrangment which is herein illustrated, or they may be slanted in opposite directions. The curved electrodes provide a capacitive function (capacitance vs. angle) which is approximately sinusoidal when fringing affects are included. This significantly reduces cyclic errors. Ideally, as seen in FIG. 4, showing an enlarged view of a sense electrode, the curved side edges of the electrodes are such that the sides of small, different but equal, incremental angles, $\theta$, subtend distances along a curved side edge of an electrode which have equal perpendicular projections, D, onto corresponding sides of the incremental angles. Such curves are spiral curves or substantially spiral curves. Within the size ranges and tolerance limitations of the presently preferred embodiment of this invention, it has been found that the use of curved side edges, defined by arcs of a circle, fall within manufacturing tolerances acceptably achieving the geometric results of FIG. 4.

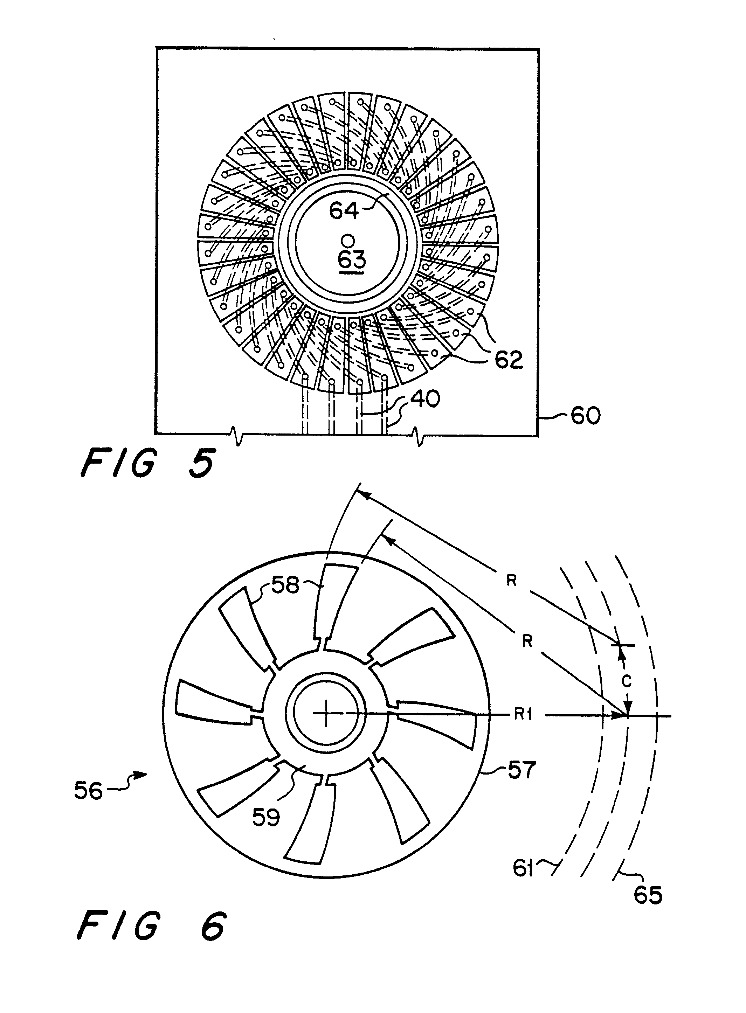

FIG. 6 illustrates one way in which the arcuate electrodes may be defined. The specific geometry applies particularly to the generation of the shapes for the sense electrodes but the geometric principles apply also to the generation of electrodes of other configurations and of other packing densities, such as the drive electrodes 38 of FIG. 2. There are 8 sense electrodes illustrated on the sense rotors of FIG's. 3 and 6. These are equally circumferentially spaced at angles of 45 degrees to one another. The opposite side edges of the electrodes 58 are arcs of circles of the same radius, R, as indicated. The centers of these arcs are located on a circle which is concentric with the center of the sense rotor 56 and are circumferentially spaced from one another by an arcuate distance C. The electrodes are equally angularly replicated in this manner proceeding around the concentric circle. In the example of FIG. 6, the radius Rl is substantially the same as the radius R and the radius Rl is substantially the same as the outer diameter of the circular plan or pattern of the sense electrodes.

As noted earlier, the geometric construction for the sense electrodes is geometrically similar to that for the construction of the drive electrodes. With respect to the drive electrodes however, the concentric circle is of lesser diameter than the outer diameter of the circular pattern of drive electrodes. The arcuate side edges of the drive electrodes are also substantially of the same radius as the radius of the concentric circle.

Different relationships between the diameter of the concentric circle and the radius of the opposite side edges can be made using this technqiue to achieve different electrode configurations. Also different slanted relationships between the electrodes and the radii of the circular pattern at the electrode locations are obtainable. The electrodes also can be made as true spirals or substantially true spirals. Other curvatures may be used.

Although the use of the concentric circle for positioning the centers of the arcs for the opposite side edges of the electrodes offers a convenient construction for laying out the electrode plan, the centers may be plotted separately. Sense rotors have been fabricated having a diameter of 38mm and a radius of 38.2mm for one electrode side edge. The center for the arc of the same radius defining the other side edge of the electrode was plotted at a point 8.6mm perpendicularly from the radius for the center of the first arc and 37.3mm from the center of the circular plan of electrodes along a line paralleling the radius for the center of the first arc.

Different concentric circles also may be used to generate the second curved side edge the center of which may lie on a circle concentric with the first but of larger or smaller radius depending upon the shape of the electrode which is desired. Portions of such concentric circles, 6l and 63, in exaggerated radially displaced positions for emphasis, are shown in FIG. 6.

The benefits derived from the use of curved electrodes are not limited to their use in a position transducer involving a three dimensional sense rotor. FIG's. 5 and 6 illustrate this point. Referring first to FIG. 6 there is illustrated a sense rotor assembly 56 which is essentially a circular printed circuit board having a substrate 57 and curved sense electrodes 58, defining a circular pattern, which are developed thereon using conventional printed circuit techniques. The curved sense electrodes 58 are each directly connected to a central circular electrode 59 which is concentrically disposed with respect to the axis of rotation of the sense rotor and is on the same side of the printed circuit board. There is no coupling to the opposite side or face of the circular sense rotor as in the three dimensional configuration, thus this is properly described as a two dimensional rotor.

The drive plate assembly 60 of FIG. 5 comprises a circular pattern of drive electrodes 62 having their side edges lying along radii of the circular pattern. A center circular pickup electrode 63 is concentrically disposed within the circular pattern of drive electrodes 62 and is surrounded by a guard ring electrode 64 which separates the pickup electrode 63 from the drive electrodes 62. Both the pickup electrode 63 and the guard electrode 64 are on the same side of the drive plate as the drive electrodes 62. The purpose of the guard electrode as described in the prior art, is to minimize capacitive of coupling, that is, stray capacity coupling, between the drive electrodes 62 and the center pickup electrode 63. Here again, the curved drive traces 40 are disposed on the back side of the printed circuit drive plate assembly, coupling the electrodes 62 in groups of four and are adapted for energization with the quadrature phased sine and cosine wave voltages ,as described in connection with FIG. 2. In operation the drive electrodes 62 confront and are capacitively coupled to the sense electrodes 58. The sense electrode signals are coupled back to the drive plate assembly 60 by means of the capacitive coupling between the center electrode 59 on the sense rotor and the confronting annular pickup electrode 63 on the drive plate assembly. The sense signal thus coupled to the pickup electrode 63 may be coupled to an external circuit through a feed-through circuit connected to the pickup electrode 63 through the substrate of the drive plate assembly 60.

Thus the use of the curved electrodes on at least one of the two members forming part of the position transducer provides the benefits of the curved electrodes in a rotary position transducer application involving a two dimensional sense rotor. Additionally the drive traces 40 which couple the drive signals into the drive electrodes and the drive traces which inter-couple the drive electrodes are similar to those described in connection with FIG.

2, whereby capacitive coupling effects between the drive electrodes and the drive traces passing on the other side of the printed circuit board are minimized.

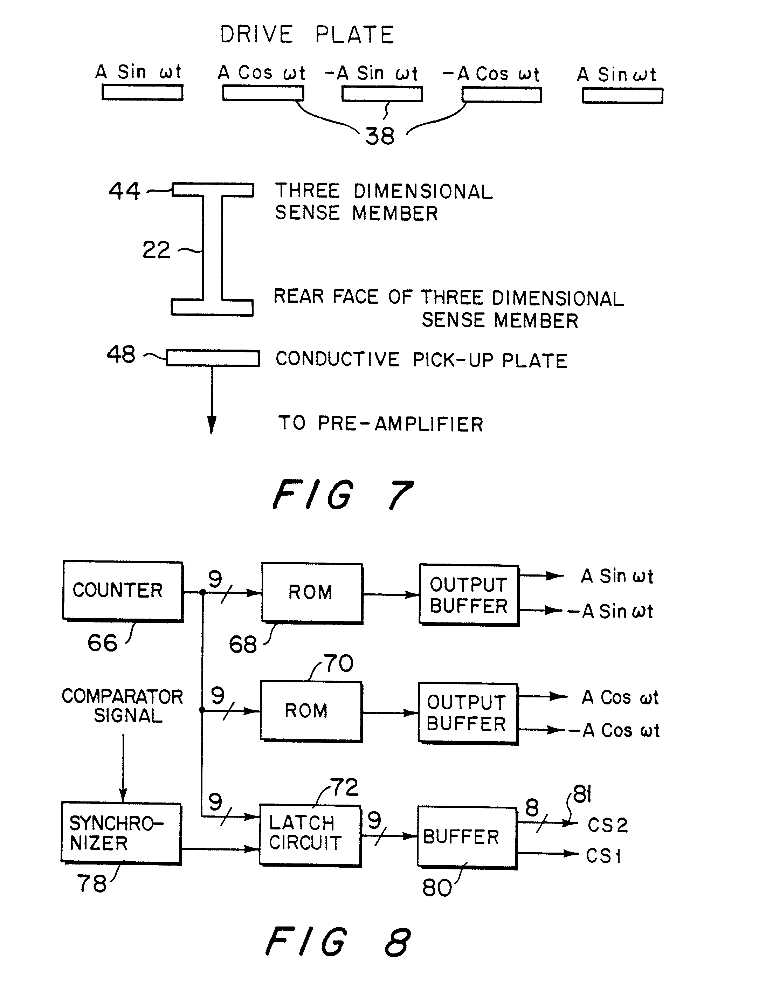

FIG. 7 is a schematic representation of the organizational concept of the capacitive position encoder or transducer system, adapted for linear or rotary applications, employing the three dimensional movable sense member. As described above, four sinusoidal drive signals progressively shifted in phase, are individually connected to four drive electrodes 38 replicated to form a repeating pattern. The sequential coupling of the drive signals to the drive electrodes is shown in FIG. 7, only five electrodes being shown for the purpose of this explanation. The sense electrodes 44, only one of which is shown, of the three dimensional movable sense member 22, pickup signals from the drive electrodes 38 which are near it. Since the phase of the drive signals is different for each electrode the phase of the signal picked up by the electrodes of the movable sense member will vary depending upon the relative locations of the sense and drive electrodes. The sense electrodes 44 are electrically coupled, via the rear pickup face of the movable sense member, to the conductive pickup electrode 48 whereby the sense signal (actually the position signal) for that specific sense electrode position may be coupled to an external circuit. As will be described, the position signal is amplified and filtered and presented to a comparator which produces a comparator signal and determines the time location of the zero crossings of the position signal. This time phase location in the comparator signal when compared to the phase of the drive signals accurately determines the position of the sense rotor relative to the drive plate, if certain constraints are observed on the shapes of the drive and sense plates and if the harmonic content of the drive signals is low. This in turn requires that either the drive signals be sinusoidal (have low harmonic content) as shown, or that the transducer output or position signals be subjected to low pass filtering during or following pre-amplification. Both methods are used here as will be described at a later point.

The purpose of the drive circuit therefore is to provide low harmonic content drive wave forms which have good amplitude matches. This in turn requires a digital means of generation of the sinusoidal drive signals. Good voltage matches may be accomplished with analog switches more easily than the required voltage matches can be generated in an analog fashion.

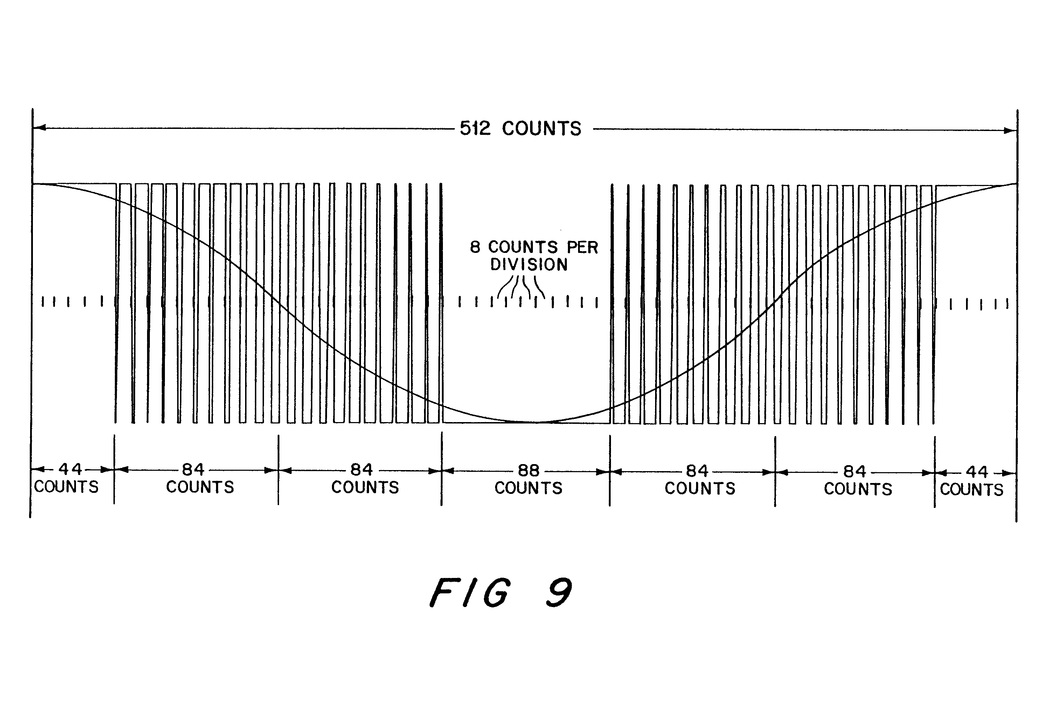

To this end provision is made for producing four, phase modulated, rectangular wave signals which are shifted successively from one another by 90 electrical degrees. A circuit for accomplishing this is illustrated in FIG. 8, in which the four phase shifted outputs are indicated using conventional analog signal notation. This digital drive circuit comprises a counter 66, two read only memories 68 and 70 and a latch circuit 72. Each drive voltage is a phase modulated, rectangular wave voltage of the type depicted in FIG. 9.

With reference to FIG. 8, the counter 66 is a 9 bit counter producing 512 counts, counting from 0-5ll, and is clocked by a 4MHz signal. The output of this counter is coupled as input to the read only memories 68 and 70 and to the latch circuit 72. The counter input to the memories 68 and 70 is a memory address signal. The read only memory 70 is similar to the read only memory 68 excepting it has been altered in content to produce a digital drive signal which is 90 degrees out of phase with that of the memory 68. Thus a sine wave emulating digital signal is produced by the read only memory 68 and a cosine wave emulating digital signal is produced by the read only memory 70. These digital drive signals coupled to the buffers 74 and 76 respectively, produce the digital drive signals functionally representing A sin wt, A cos wt, -A sin wt and -A cos wt, using conventional analog signal notation. The inverse sine and cosine signals are conventionally produced by inverter circuits (not shown).

The position signals from the pickup plate or electrode 48 (or 63, FIG. 5) are coupled back to a synchronizer circuit 78 (FIG. 8) via a filter circuit 82, depicted in the system schematic of FIG. l0. The filter circuit is detailed in FIG. ll. The phase of the comparator signal is linearly proportional to the position of the member being controlled in its axis of movement. One cycle of phase shift, 360 degrees electrically, corresponds to 45 degrees of angular displacement of the transducer sense rotor. The synchronizer circuit output signal is used to clock the counter value, nine bits at a time, into the latch circuit when a comparator signal edge is sensed and the counter is stable, providing an indication of the position of the controlled member in l/2048 or l/4090 increments, at the output of the latch circuit 72.

The tri state buffer circuit 80 has an 8 bit output circuit 8l. A microprocessor (not shown) reads either the most significant 8 bits of the transducer position output at the output of the buffer circuit 80 or the least significant 8 bits. The output circuits CSl and CS2, also coupled to the microprocessor, determine whether the most significant or the least significant 8 bits will be read by the microprocessor. If neither CSl nor CS2 is functional the transducer output signal is decoupled from the microprocessor.

The digital drive signal shown in FIG. 9 is a phase modulated, rectangular wave voltage representing the time varying analog cosine function, A cos wt. The characteristic time varying analog cosine function represented by this signal is plotted on the phase modulated rectangular wave in FIG. 9. The sine wave function, A sin wt, which is separately generated, as described, originates at point A in its cyclic rectangular wave pattern. The minus cosine signal, -A cos wt, is the inverse of the phase modulated rectangular wave depicted in FIG. 9 and the minus sine function, -A sin wt, is the inverse of the sine function. These four drive signals are produced simultaneously, ideally have zero even harmonics (2nd, 4th, etc.) and ideally have low order odd harmonics (3d = 44db below fundamental and 5th = 42db below fundamental). Higher order harmonics, particularly the 63rd and the 65th are present but are removed from the sensed signal by low pass filtering. Close attention to the finite rise times and fall times of the signals in the electronic circuits associated with the production of these signals can result in signal rise times and fall times which are equal to each other, in which case the ideal situation described above, if not actually achieved, is very closely realized. The resulting wave forms represent a band limited version of the ideal signals.

This approach offers a significant improvement over the situation where square wave drive signals are used. With the drive signals or wave forms described above, it is possible to use a two pole, low pass filter in the output amplifier, instead of a four pole low pass filter, as is required in prior art applications where square wave drive signals are used. Such a two pole low pass filter is shown in FIG. ll. The filter circuit comprises a low input impedance pre-amplifier 83 coupled to a low pass filter section 84. The position signal from the pickup plate or electrode 48 (see FIG. l0) is coupled to the pre-amplifier. The output of the low pass filter 84 is coupled as input to one terminal of an amplifer forming the input to a high pass filter circuit 86 which is used to reject 60 and l20 Hz interference and DC offset resulting from the amplifiers. The output of the high pass filter is coupled via a notch filter 88 to one terminal of an amplifier 89 forming part of a zero-cross detector circuit 90, the capacitive coupled output of which is the comparator signal. As indicated in FIG. ll, this comparator signal, which is a square wave signal, is used to indicate the position of the controlled member in its axis. This is the signal which in FIG. l0 is coupled back to the pin 2 in the terminal block shown and which is thereafter coupled as input to the synchronizer circuit 78 of FIG. 8.

The drive electrodes and the sense electrodes are configured to provide capacitive coupling between a single drive electrode and a single sense electrode that closely approaches a pure sine wave as a function of angular displacement of the sense rotor electrodes with respect to the drive electrodes. This results from the configuration of the sense rotor electrodes and the drive electrodes. The angle being referred to is 360° electrically at the time a given sense rotor electrode has passed by a set of four drive electrodes. As illustrated herein, there are eight sets of four drive electrodes defining a circular pattern which is part of the drive plate printed circuit board assembly 24, as seen, for example, in FIG's. I and 2. Part of the spacially sinusoidal capacitive function is due to electrode geometry and part is due to fringing effects. The fringing fields are not negligible because the spacing between the drive electrodes and the sense rotor electrodes is very large relative to the other dimensions of the drive plate electrodes and the sense rotor electrodes. In one practical embodiment the spacing is about .4mm to .7mm. When these two effects are combined the result is a spacial capacitance function which is about as harmonically pure with respect to harmonics of the capacitance function as the drive wave forms are electrically with respect to drive wave form harmonics.

It can be shown mathematically that if the capacitance function has even harmonic distortion that there are no errors generated by the four phase drive arrangement such as disclosed herein. If the capacitance function has 3rd or 5th harmonic distortion the result is a cyclic error which repeats four times per electrical revolution or electrical cycle, that is, 32 times per mechanical revolution. If the capacitance function has 7th or 9th harmonic distortion the result is a cyclic error which repeats eight times per electrical revolution and so on. This eight times error is usually virtually unmeasurable, and the four times error amounts to I/4096 or so of a revolution. Since the resolution of the phase measurement is I/2048 of a revolution (with I/4096 of a revolution optionally available) this error is not a problem. Another error which occurs is the error due to the drive imbalance. This error occurs once per electrical period or cycle (eight times per mechanical revolution). This error also amounts to about I/4096 or so of a revolution. A third source of error is the error due to mechanical runout and other imperfections of this type. This generally is less than I/2048 of a turn.

As an alternative to the use of four drive signals displaced in phase by 90 electrical degrees, a drive system using eight drive signals which are successively phase shifted by 45 electrical degrees may be employed. These eight drive electrodes then form one electrical measurement cycle. This system has been shown to give zero cyclic errors due to the 3rd and 5th harmonics of the capacitance function as well (but not the 7th and 9th). Additional details of a system employing eight phase displaced drive signals, achieving electrical and mechanical electrode interdigitation, is found in U.S. Patent 4,522,5I7, referred to in the description of the prior art.

## Claims

I. A position transducer system responsive to angular displacement, **characterized** by: means including two relatively angularly displaceable members (22,24; 56,60) having confronting capacitively coupled electrode faces; and a set of electrodes (44,38;58,62) on each of said electrode faces comprising a plurality of electrodes disposed in outwardly radiating positions in a repeating circular pattern, the set of electrodes of at least one - (56) of said members comprising curved electrodes (58) having curved opposite edges which are curved in substantially the same direction, for providing an essentially sinusoidal capacitance versus angle function for the purpose of minimizing transducer errors.

2. A position transducer system according to claim I, **characterized** in that the curved opposite side edges of said electrodes (44;58) are swept back with respect to one direction of rotation of that member (22; 56) which rotates.

3. A position transducer system according to claim I or 2, **characterized** in that said curved opposite side edges of said electrodes are substantially or precisely spiral curved edges.

4. A position transducer system according to claim I or 2, **characterized** in that said curved opposite side edges of said electrodes (58) are arcs of a circle.

5. A position transducer system according to claim 4, **characterized** in that said arcs of a circle are substantially of the same radius (A) as the outer diameter of the circular pattern of said electrodes (58) of said one member.

6. A position transducer system according to claim 5, **characterized** in that the centers of said arcs of a circle defining the curved opposite side edges of each electrode of said one member are circumferentially spaced (about C) substantially on a circle concentric with the circular pattern of said one set of electrodes (58).

7. A position transducer system according to one of claims I to 6, **characterized** in that the member having said curved electrodes (58) is the rotatable member (56) or the non-rotatable member.

8. A position transducer system according to claims I to 6, **characterized** in that the set of electrodes of the other (24) of said members comprises curved electrodes (38) having curved opposite side edges , the electrodes (38,44) of both said members (24; 22) preferably being curved in the same direction when said electrode faces are disposed in confronting relationship.

9. A position transducer system according to claim 8, **characterized** in that the curved opposite side edges of the electrodes of the other of said members are arcs of a circle of a lesser radius than the radius of the curved opposite side edges of the electrodes of said one of said members, the centers of said arcs of a circle being preferably circumferentially spaced on a circle of lesser radius than the outer radius of the circular pattern of electrodes and concentric with the circular pattern of the set of electrodes of said other of said members.

I0.A position transducer system according to one of the preceding claims, **characterized** in that the number of electrodes of the other of said members is an even multiple of the number of electrodes of said one member.

II.A position transducer system according to one of the preceding claims, **characterized** in that each member (22,24; 56,60) comprises a flat plate substrate of electrical insulating material upon which said electrodes (44,38; 56,62) are mounted.

I2.A position transducer system according to claim II, **characterized** by:
a central electrode (59) on the flat plate substrate - (57) of said one member (56) and coupled to said curved electrodes (58), said one member being a rotatable member;
a central electrode (63) on the flat plate substrate of the other of said members electrically insulated from the electrodes (62) on said other (60) of said members, said other of said members being a stationary member;
electrical connections (40) at the outer ends of a first selected even submultiple number of electrodes (62) on said stationary member (60) for coupling phase shifted time varying electrical energy to said first selected even submultiple number of electrodes;
individual circuits (66 to 72) on the side of said stationary member (60) opposite said electrodes and extending through said substrate, coupling each outer end of each electrode to the inner end of each corresponding electrode of an adjacent selected even multiple number of electrodes removed in the same direction around said circular patterns, said individual circuits preferably being curved; and

means for establishing an electrical connection with the central electrode (63) on said other (60) of said members.

I3. A position transducer system according to one of claims I to II, **characterized** in that said rotatable member (22) is three dimensional and has opposite axial faces, one axial face comprising said curved electrodes (44) and the opposite axial face comprising a pickup face electrically coupled to said curved electrodes; and in that a pickup electrode (48) is capacitively coupled to said pickup face for establishing a connection to an external circuit.

I4. A position transducer system according to claim I3, **characterized** in that said rotatable member (22) comprises a body portion of electrical insulating material having said curved electrodes - (44) on said one axial face, or in that said rotatablemember comprises a body portion of electrical conducting material, said curved electrodes (44) being integral projections of said body portion.

I5.A positon transducer system according to one of the preceding claims, having integral circuit and electrode connections, **characterized** in that one (24; 60) of said members is a stationary member and comprises a circuit board of electrical insulating material having said set of electrodes - (38) disposed on said electrode face;
a group of circuits (66 to 80) on the opposite side of said circuit board from said electrode face is individually coupled through said circuit board to individual electrodes of a first group of electrodes of said set of electrodes;
each outer end of each electrode (38) is connected through said circuit board via a circuit on said opposite face to the inner end of a corresponding electrode in an adjacent group of electrodes in said circular pattern, corresponding to said first group of electrodes, providing individual continuous circuits including corresponding electrodes of each group; and
means are provided for coupling individual, time varying successively phase shifted voltages to individual circuits of said group of circuits.

I6.A position transducer system according to claim I5, **characterized** in that said time varying voltages are phase modulated, rectangular wave voltages.

I7. A position transducer system according to claim I5 or I6, **characterized** in that said group of circuits comprises four circuits.

I8. A position transducer system according to claim I7, **characterized** by:
a first circuit (66,68) for producing a first phase modulated, rectangular wave voltage and its inverse voltage;
a second circuit (66,70) for producing a second phase modulated, rectangular wave voltage, shifted in phase from said first phase modulated rectangular wave voltage by 90 electrical degrees, and its inverse voltage, and

means for coupling said first phase modulated, rectangular wave voltage, said second phase modulated, rectangular wave voltage, the first inverse voltage and the second named inverse voltage, in the named sequence, to successive ones of said four circuits of said group of circuits, for energizing and electrically interdigitating said electrodes.

19. A position transducer system according to claim 18, **characterized** in that said first circuit comprises a counter (66) driven read only memory (68) for producing said first phase shifted, rectangular wave voltage, and said second circuit comprises a counter driven read only memory (70) for producing said second phase shifted, rectangular wave voltage shifted in phase by 90 electrical degrees from said first phase shifted, rectangular wave voltage.

20. A position transducer system according to one of claims I to II, **characterized** in that

one of said members is a rotatable member (22) and the other member is a stationary member (24);

a pickup electrode electrode (48) is capacitively coupled to said rotatable member (22) for picking up position signals indicative of the angular position of said rotatable member relative to said stationary member (24);

a sychronizing circuit (78) is provided;

means for coupling said position signals to said sychronizing curcuits is provided;

a counter (66) for producing count pulses is provided, and

a digital position signal output circuit including a latch circuit (72) is coupled to said counter (66) for receiving count pulses and is coupled to and controlled by said sychronizing circuit (78) for receiving said count pulses under the control of said synchronizing circuit.

21. A position transducer system according to claim 20, **characterized** in that said digital position output circuit comprises a buffer circuit (80) for controlling the selection of most significant or least significant bits in the digital output of said latch circuit (72) for use in determining the angular position of said rotatable member (22) relative to said stationary member (24).

22. A capacitive position transducer system, **characterized** by:

a drive electrode assembly (24) having a plurality of drive electrodes (38) forming a drive electrode face;

means (66 to 80) for coupling a plurality of successively phase shifted, time varying voltages individually to said plurality of drive electrodes;

a three dimensional sense electrode assembly - (22) having a plurality of sense electrodes (44) forming a sense electrode face confronting and capacitively coupled to said drive electrode face, and having a pickup face physically removed from but electrically coupled to said sense electrode face on a side of said three dimensional sense electrode assembly opposite said sense electrode. face; and

a pickup electrode (48) confronting and capacitively coupled to said pickup face.

23. A capacitive position transducer system, **characterized** by:

relatively movable, capacitively coupled, drive and sense electrode assemblies (22,24), each having a plurality of individual electrodes; means (66 to 80) for coupling a plurality of successively phase shifted, phase modulated, rectangular wave voltages, individually to the electrodes of the drive electrode assembly; and

means (48) coupled to the electrodes (44) of the sense electrode assembly (22) for providing an indication of the relative position of said drive and sense electrode assemblies (22,24).

FIG 1

FIG 2

FIG 3

0 226 716

FIG 4

FIG 5

FIG 6

DRIVE PLATE

A Sin ωt      A Cos ωt    −A Sin ωt   −A Cos ωt      A Sin ωt

38

44 — THREE DIMENSIONAL SENSE MEMBER

22

REAR FACE OF THREE DIMENSIONAL SENSE MEMBER

48 — CONDUCTIVE PICK-UP PLATE

TO PRE-AMPLIFIER

*FIG 7*

COUNTER 66 → 9 → ROM 68 → OUTPUT BUFFER → A Sin ωt / −A Sin ωt

70

COMPARATOR SIGNAL → 9 → ROM → OUTPUT BUFFER → A Cos ωt / −A Cos ωt

72

SYNCHRO-NIZER 78 → 9 → LATCH CIRCUIT → 9 → BUFFER 80 → 8 — 81 → CS2 / CS1

*FIG 8*

512 COUNTS

8 COUNTS PER DIVISION

44 COUNTS | 84 COUNTS | 84 COUNTS | 88 COUNTS | 84 COUNTS | 84 COUNTS | 44 COUNTS

0 226 716

FIG 9

FIG 10

SIN
COS
−SIN
−COS

1
3
4
5
6
7
8
2

COMMON

DRIVE
PLATE
24

SENSE
ROTOR
22

PICK-UP
PLATE
42

ENCODER MOTOR
DRIVE SHAFT

POSITION
SIGNAL

FILTER

82

TEST

COMPARATOR
SIGNAL

0 226 716

POSITION SIGNAL

COMMON

83

LOW PASS FILTER 84

HIGH PASS FILTER 86

FILTER 82

NOTCH FILTER 88

TEST

ZERO-CROSS DETECTOR 90

89

TO PIN 2

COMPARATOR SIGNAL

COMPARE X OR COMPARE Y

*FIG 11*